# EUROPÄISCHE PATENTANMELDUNG

(11) **EP 0 988 835 A2**
(43) Veröffentlichungstag der Anmeldung: **29.03.2000**
(21) Anmeldenummer: 99118519.0
(22) Anmeldetag: 18.09.1999
(51) Int. Cl.: A61C 7/36

(54) **Vorrichtung zur Ober- und/oder Unterkiefer-Wachstumsbeschleunigung**

(30) Priorität: 25.09.1998 DE 19844005
(71) Anmelder: Habib, Sevinc Dr., 50667 Köln (DE); Misel, Sevinc Dipl.-Ing., 51519 Odenthal (DE)
(72) Erfinder: Habib, Sevinc Dr., 50667 Köln (DE); Misel, Sevinc Dipl.-Ing., 51519 Odenthal (DE)
(74) Vertreter: Nau, Walter, Dipl.-Ing.

(57) **Zusammenfassung**

Die Erfindung bezieht sich auf eine Vorrichtung zur Ober- und/oder Unterkiefer-Wachstumsbeschleunigung, wobei zumindest an zwei Gruppen von Zähnen des Ober- und/oder Unterkiefers Halter befestigt sind, zwischen denen zumindest ein Spannelement einsetzbar ist, wobei das Spannelement als Federstab ausgebildet ist, der mit seinen Enden mittels Kugelgelenken an den Haltern befestigbar ist.

## Beschreibung

Die Erfindung bezieht sich auf eine Vorrichtung zur Ober- und/oder Unterkiefer-Wachstumsbeschleunigung, wobei zumindest an zwei Zähnen oder Gruppen von Zähnen des Ober- und/oder Unterkiefers Halter befestigt sind, zwischen denen zumindest ein Spannelement einsetzbar ist.

Es sind zur Wachstumsbeschleunigung der Ober- und/oder Unterkiefer verschiedenartige Spannelemente bekannt.

Zum einen gibt es Spannelemente zur Wachstumsbeschleunigung des Unterkiefers gegenüber dem Oberkiefer und umgekehrt zwecks Korrektur der Bißlage, wobei beidseitig der Kiefer Spannelemente vorgesehen sind, die an ihren Enden Ösen tragen und in Stege an Molarbändern der Brackets eingesetzt sind und zwar derart, daß die Ösen einen erheblichen Abstand voneinander haben. Die Spannelemente sind dabei so eingesetzt, daß sie erst am Ende der Kaubewegung der Kiefer sich an Anschlägen abstützen und dann Kräfte ausüben.
Diese Spannelemente haben den Nachteil, daß sie nur nach Auftreffen auf den Anschlag Kräfte ausüben und die Spannkräfte der Spannelemente nur dann ausgenutzt werden. Dadurch entstehen unkontrollierte Kräfte, die nur in sagitaler Richtung (Längsrichtung der Kiefer) wirken und keine Variationsmöglichkeiten zulassen.

Es ist auch bekannt, innerhalb der Kiefer Spannelemente bzw. Querschraubsysteme vorzusehen, um eine Kieferveränderung zu erreichen. Diese Systeme sind äußerst unbequem und werden von den Patienten nur widerstrebend angenommen.

Aufgabe der vorliegenden Erfindung ist es, eine Vorrichtung bzw. ein System zur Ober- und/oder Unterkiefer-Wachstumsbeschleunigung zur Verfügung zu stellen, die die Nachteile der vorgenannten Einrichtungen vermeidet, den Patienten nur minimal behindert und es erlaubt, gezielte Kräfte in gewünschten Richtungen und an den optimalen Stellen zur Verfügung zu stellen.

Die Aufgabe der Erfindung wird dadurch gelöst, daß das Spannelement als Federstab ausgebildet, der mit seinen Enden mittels Kugelgelenken an den mit den Zähnen bzw. Zahngruppen verbundenen Haltern des Ober- und/oder Unterkiefers befestigbar ist. Durch die Befestigung des bzw. der Federstäbe über die Kugelgelenke ist die Kraftrichtung der Federstäbe nur abhängig von der Verformung bzw. der Verformungsrichtung der Federstäbe und ihrer Federkräfte. Dadurch lassen sich an beliebigen Stellen in beliebigen Richtungen Kräfte aufbringen und zwar an einem Kiefer (Ober- oder Unterkiefer) oder auch zwischen Ober- und Unterkiefer zur Korrektur der dem Kieferorthopäden an sich bekannten Anomalien der Kiefer.

Die Federstäbe weisen in vorteilhafter Weise einen Federkern auf, der mit einer Hülle umgeben ist, die vorzugsweise aus Gummi oder Kunststoff hergestellt ist. An den Enden der Federstäbe sind Kugelgelenkschalen angeordnet, die an den Federkernen befestigt sind und dichtend an die Hülle anschließen. An den Haltern, die mit den Zähnen verbunden sind, sind Kugelgelenkköpfe befestigt, die in die Kugelgelenkschalen eingesetzt und dort verriegelt werden. Das kann in üblicherweise durch Verriegelungsfedern im Bereich der Öffnungen der Kugelgelenkschalen erfolgen, wodurch der Öffnungsquerschnitt nach Einsetzen der Kugelgelenkköpfe verringert wird. Die Halter können z.B. als Kunststoffschalen ausgebildet sein, die ein oder mehrere Zähne ummanteln. Die Kugelgelenkköpfe können auch in sonstiger Weise, z.B. mittels einer Öffnung in denselben in den zum Molarband und den Brackets gehörenden Draht eingesetzt sein. Grundsätzlich können natürlich auch die Kugelgelenkschalen an den Haltern oder den Drähten befestigt sein und die Federstäbe an ihren Enden Kugelgelenkköpfe aufweisen. Es kommt entscheidend darauf an, daß die volle Beweglichkeit der Federstäbe gewährleistet ist, so daß sich die Kräfte ohne Behinderung durch die Gelenke frei entfalten können.

Es hat sich weiterhin als vorteilhaft herausgestellt, daß die durch die Öffnungen der Kugelgelenkschalen gehenden Ebenen zur zugehörigen Mantellinie des Federstabes in einem sich nach außen öffnenden Winkel in Richtung zur Federstabachse geneigt sind, wobei sind ein Winkel von 5° als vorteilhaft herausgestellt hat. Dadurch wird sichergestellt, daß unter keinen Umständen der Rand der Öffnungen der Kugelgelenkschalen das Zahnfleisch irritiert.

Weiterhin hat sich als vorteilhaft herausgestellt, wenn die Mittelpunkte der Kugelgelenkschalen im wesentlichen quer zur Längsachse der Federstäbe in einer Ebene, die im wesentlichen parallel zu der durch die Öffnungen der Kugelgelenkschalen verlaufenden Ebene liegt, versetzt sind, wobei der Versatz an beiden Kugelgelenkschalen eines Federstabes in derselben Richtung liegt. Durch diesen Versatz wird erreicht, daß sich die Federstäbe durch die außermittige Krafteinwirkung stabilisieren und gezielt im Kiefer- bzw. Mundbereich angeordnet sind. Dies kommt insbesondere dann zum tragen, wenn die Federstäbe an einer Zahnreihe eines Kiefers angeordnet sind. Vorzugsweise beträgt der Versatz bei den üblichen Federstababmessungen ca. 3 mm.

Die Mittelpunktverlagerungen in der weiteren Richtung, d.h. das Eintauchen der Kugelgelenkköpfe in die Kugelgelenkschalen, führt ebenfalls zur Stabilisierung der Federstäbe, insbesondere bei ihrem Einsatz zwischen Ober- und Unterkiefer.
Es sei darauf hingewiesen, daß der besagte Versatz auch an einer Kugelgelenkschale ausreichen kann. Er könnte dort dann ggf. etwas vergrößert werden.

Die Federstäbe werden in vorteilhafter Weise in verschiedenen Maßen und verschiedenen Federstärken zur Verfügung gestellt, wobei sie Markierungen zum Erkennen der verschiedenen Maße und Stärken tragen, beispielsweise verschieden gefärbt sind. Um die Benutzung der Federstäbe bei allen Patienten problemlos sicherzustellen, werden diese aus allergiefreien Werkstoffen hergestellt.

Wird die erfindungsgemäße Vorrichtung als Element zur Kieferverbreiterung eingesetzt, so werden die Kugelgelenkköpfe an Haltern, die in einer Zahnebene auf verschiedenen Seiten der Zähne befestigt sind, angebracht und die Federstäbe außerhalb der Zähne innerhalb der Lippen angeordnet und zwar so, daß der Versatz der Kugelgelenkschalen in Richtung der Zahnköpfe zeigt. Die Federstäbe erhalten dadurch eine Kraftkomponente, die in Richtung der Zahnwurzeln gerichtet ist, so daß sie gut zu tragen sind. Durch ihre Lage außerhalb der Kiefer werden die Patienten verhältnismäßig wenig belastet. Darüberhinaus ergibt sich in vorteilhafter Weise beim Tragen ein Anschwellen der Kräfte dadurch, daß die Muskeln im Lippenbereich den Federstab intermittierend belasten und dadurch die Krafteinwirkung variieren.

Wird die erfindungsgemäße Vorrichtung zur Korrektur der Lage des Oberkiefern gegenüber dem Unterkiefer und umgekehrt eingesetzt, beispielsweise zur Korrektur der Bißlage, dann werden die Kugelgelenkköpfen an benachbarten Haltern am Ober- und Unterkiefer befestigt und die Federstäbe bogenförmig außerhalb der Zahnreihen angeordnet, wobei der Versatz der Kugelgelenkschalen jeweils in Richtung der Zahnköpfe zeigt. Dadurch tritt auch hier eine Stabilisierung der Federstäbe ein. Es entstehen Kräfte zwischen Ober- und Unterkiefer deren Richtung dadurch genau definiert werden kann, daß die Halter direkt übereinander bzw. versetzt zueinander angeordnet sind. Weiterhin können die Halter im rückwärtigen oder vorderen Bereich der Zähne angeordnet sein, wobei der Bogen der Federstäbe in Richtung des Mundes oder in Gegenrichtung verlegt ist. Vorteilhaft ist weiterhin, daß die Kräfte während der Kaubewegung der Kiefer immer ein Mindestmaß aufweisen, nur in der Stärke variieren und nicht beim Öffnen des Mundes bzw. der Zähne auf Null zurückgehen.

Zur weiteren Erläuterung der Erfindung wird auf die Zeichnungen verwiesen, in denen Ausführungsbeispiele der Erfindung vereinfacht dargestellt sind.

Es zeigen:
- Fig 1:: eine perspektivische Darstellung eines erfindungsgemäßen Federstabes ohne Kugelgelenkköpfe,
- Fig. 2 + 3:: je an den Enden der Federstäbe angeordneten Kugelgelenkschalen als Einzelteile in verschiedenen Ansichten,
- Fig. 4:: die skizzierte Darstellung einer Zahnreihe des Unter- oder Oberkiefers mit erfindungsgemäß angeordnetem Federstab,
- Fig. 5:: eine skizzierte Seitenansicht eines Ober- und Unterkiefers mit einem zur Korrektur der Bisslage angeordneten Federstab und
- Fig. 6:: eine skizzierte Darstellung entsprechend Fig. 5, bei der der Federstab an Drähten zwischen Brackets befestigt ist.

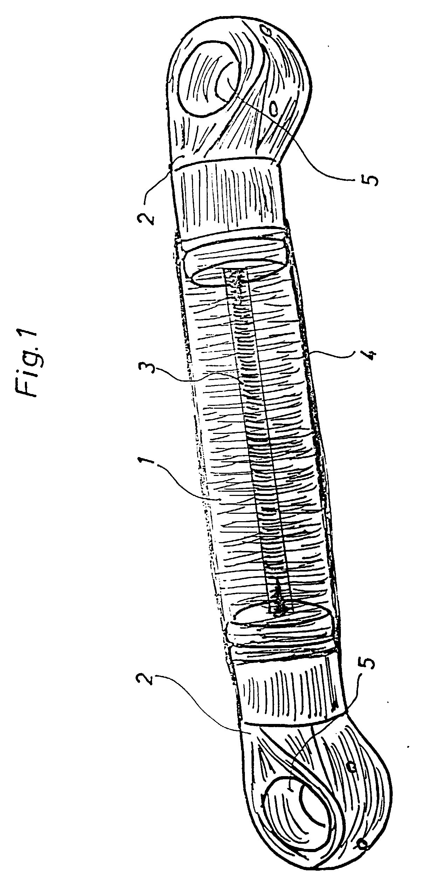

In den Fig. 1 bis 6 sind, soweit im einzelnen dargestellt, mit 1 ein erfindungsgemäßer Federstab bezeichnet, der an seinen Enden Kugelgelenkschalen 2 aufweist, die an einem Federkern 3 befestigt sind, wobei der Federkern 3 von einer Hülle 4 umgeben ist, die dichtend mit den Kugelgelenkschalen verbunden ist.

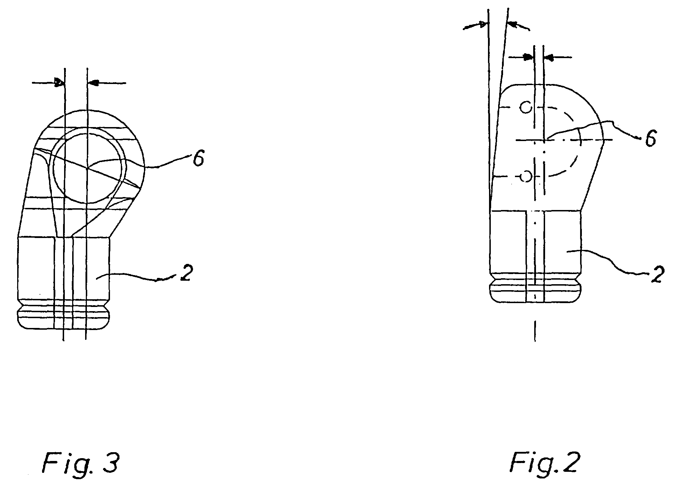

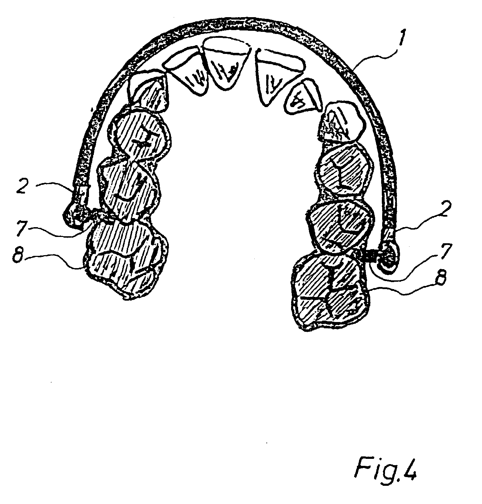

Wie insbesondere den Fig. 2 und 3 zu entnehmen ist, sind die Öffnungen der Kugelgelenkschalen mit 5 bezeichnet, wobei die durch die Öffnungen gehende Ebene um einen Winkel von 5° geneigt ist. Der Winkel öffnet sich nach außen, wobei die Neigung in Richtung zur Längsmittelachse des Federstabes 1 zeigt.
Wie insbesondere Fig. 2 weiterhin zu entnehmen ist, ist der Mittelpunkt der Kugelgelenkschale gegenüber der Längsmittelachse des Federstabes tiefergesetzt, so daß sich zwischen der Kraftebene des Federstabes und dem Stützpunkt ein Moment ergibt, das zur Stabilisierung des Federstabes im Mund beiträgt, insbesondere dann, wenn der Federstab zwischen Ober- und Unterkiefer eingesetzt ist. Wie sich weiterhin aus Fig. 3 ergibt, ist der Mittelpunkt der Kugelgelenkschale weiterhin quer zur Längsachse des Federstabes versetzt, und zwar ist dieser Versatz rechtwinklig zu der zuvor beschriebenen Verschiebung des Mittelpunktes der Kugelgelenkschale in der Tiefe. Auch dadurch ergibt sich ein Hebelarm zwischen der Federkraft im Federstab und der Stützstelle, so daß sich auch dadurch eine Stabilisierung des Federstabes ergibt, und zwar insbesondere dann, wenn der Federstab an einer Zahnreihe, d. h. am Unter- oder Oberkiefer, gemäß Fig. 4 eingesetzt ist.

Wie insbesondere Fig. 4 zu entnehmen ist, umgreifen die Kugelgelenkschalen 2 des Federstabes 1 Kugelgelenkköpfe 7, die ihrerseits an Haltern 8 befestigt sind. Im Ausführungsbeispiel gemäß Fig. 4 sind diese Halter als Kunststoffschalen ausgebildet, die mehrere Zähne ummanteln bzw. umgreifen.

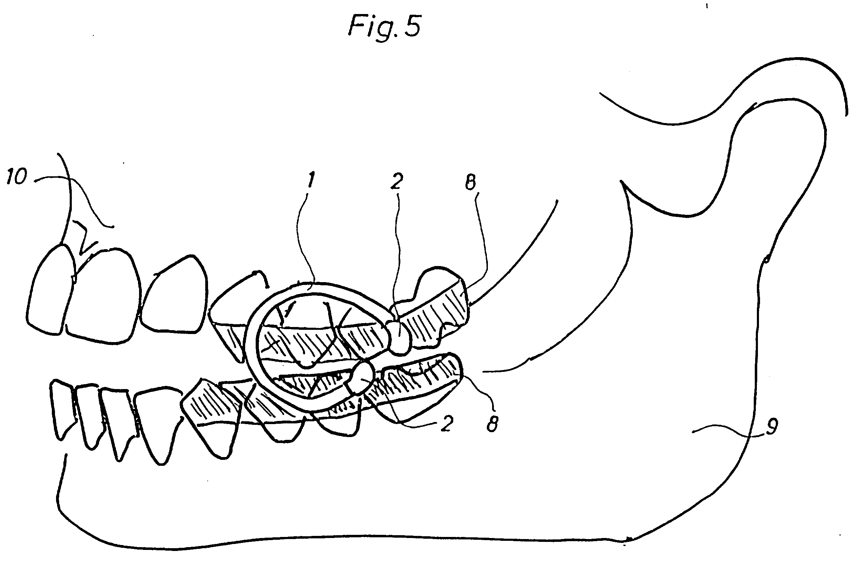

In Fig. 5 ist skizziert mit 9 ein Unterkiefer und mit 10 ein Oberkiefer bezeichnet, wobei dort Zähne des Unterkiefers 9 und Zähne des Oberkiefers 10 mittels Halter 8 umfaßt sind und mit nicht dargestellten Kugelgelenkköpfen in Wirkverbindung stehen, zwischen denen ein Federstab 1 angreift. In Fig. 5 ist nur ein Federstab einer Seite dargestellt, wobei zweckmäßigerweise auf der gegenüberliegenden Seite ein entsprechender Federstab angeordnet ist.

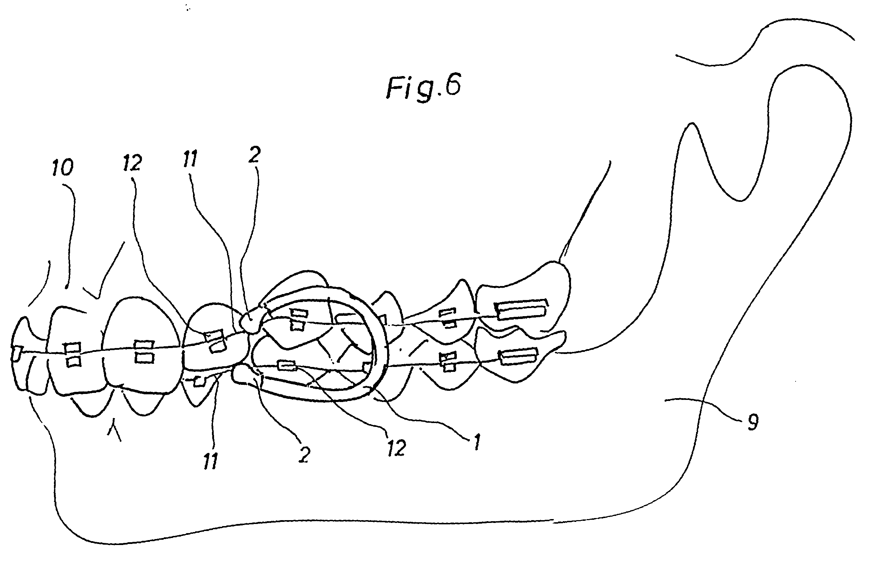

Wie insbesondere Fig. 6 zu entnehmen ist, können die nicht dargestellten Kugelgelenkköpfe nicht nur mittels Halter an den Zähnen befestigt sein. Sie können auch an den Drähten 11 zwischen den Brackets 12, z. B. mittels einer Öffnung in den Kugelgelenkköpfen befestigt sein, so daß die Kräfte über die Drähte und die Brackets auf die Zähne und damit auf die Kiefer wirken.

## Patentansprüche

1. Vorrichtung zur Oberkiefer - Wachstumsbeschleunigung und/oder Unterkiefer - Wachstumsbeschleunigung, wobei zumindest an zwei Zähnen oder Gruppen von Zähnen des Oberkiefers (10) und/oder Unterkiefers (9) Halter (8) befestigt sind, zwischen denen zumindest ein Spannelement einsetzbar ist,
***dadurch gekennzeichnet, daß*** das Spannelement als Federstab (1) ausgebildet ist, der mit seinen Enden mittels Kugelgelenken an den Haltern (8) des Oberkiefers (10) und/oder Unterkiefers (9) befestigbar ist.

2. Vorrichtung nach Anspruch 1,
***dadurch gekennzeichnet, daß*** die Federstäbe (1) einen Federkern (3) aufweisen, der mit einer Hülle (4) umgeben ist, die vorzugsweise aus Gummi oder Kunststoff hergestellt ist.

3. Vorrichtung nach einem der Ansprüche 1 oder 2,
***dadurch gekennzeichnet, daß*** die Federstäbe (1) an ihren Enden Kugelgelenkschalen (2) aufweisen, die an den Federkernen (3) befestigt sind und dichtend an die Hülle (4) anschließen.

4. Vorrichtung nach einem der vorhergehenden Ansprüche,
***dadurch gekennzeichnet, daß*** an den Haltern (8) Kugelgelenkköpfe (7) befestigt sind, die in die Kugelgelenkschalen (2) einsetzbar und dort verriegelbar sind.

5. Vorrichtung nach einem der vorhergehenden Ansprüche,
***dadurch gekennzeichnet, daß*** die durch die Öffnungen (5) der Kugelgelenkschalen (2) gehenden Ebenen zur zugehörigen Mantellinie des Federstabes (1) in einem sich nach außen öffnenden Winkel in Richtung zur Federstabachse geneigt sind.

6. Vorrichtung nach Anspruch 5,
***dadurch gekennzeichnet, daß*** der Winkel 2° bis 10°, vorzugsweise 5° beträgt.

7. Vorrichtung nach einem der vorhergehenden Ansprüche,
***dadurch gekennzeichnet, daß*** die Mittelpunkte (6) der Kugelgelenkschalen (2) im wesentlichen quer zur Längsachse der Federstäbe (1) in einer Ebene, die im wesentlichen parallel zu der durch die Öffnungen (5) der Kugelgelenkschalen (2) verlaufenden Ebene liegt, versetzt sind, wobei der Versatz an beiden Kugelgelenkschalen (2) eines Federstabes (1) in derselben Richtung liegt.

8. Vorrichtung nach einem der vorhergehenden Ansprüche,
***dadurch gekennzeichnet, daß*** die Mittelpunkte (6) der Kugelgelenkschalen (2) im wesentlichen quer zur Längsachse der Federstäbe (1) in einer Ebene, die im wesentlichen senkrecht zu der durch die Öffnungen (5) der Kugelgelenkschalen (2) verlaufenden Ebene liegt, so versetzt sind, daß die Kugelgelenkköpfe (7) tiefer in die Kugelgelenkschalen (2) tauchen, wobei der Versatz an beiden Kugelgelenkschalen (2) eines Federstabes (1) in derselben Richtung liegt.

9. Vorrichtung nach einem der vorhergehenden Ansprüche,
***dadurch gekennzeichnet, daß*** Federstäbe (1) verschiedener Maße und verschiedener Federstärken zur Verfügung stehen, wobei sie Markierungen, z.B. Farbgebungen, zum Erkennen der verschiedenen Maße und Stärken tragen.

10. Vorrichtung nach einem der vorhergehenden Ansprüche,
***dadurch gekennzeichnet, daß*** die Federstäbe (1) einschließlich der Kugelgelenkköpfe (7) aus allergiefreien Werkstoffen hergestellt sind.

11. Vorrichtung nach einem der vorhergehenden Ansprüche,
***dadurch gekennzeichnet, daß*** die Kugelgelenkköpfe (7) beim Einsatz der Federstäbe (1) als Elemente zur Kieferverbreiterung an in einer Zahnebene auf verschiedenen Seiten angebrachten Haltern (8) befestigt sind und die Federstäbe (1) außerhalb der Zähne und innerhalb der Lippen derart angeordnet sind, daß der Versatz der Kugelgelenkschalen (2) in Richtung der Zahnköpfe zeigt.

12. Vorrichtung nach einem der Ansprüche 1 bis 10,
***dadurch gekennzeichnet, daß*** die Kugelgelenkköpfe (7) beim Einsatz der Federstäbe (1) zur Korrektur der Bißlage zwischen Oberkiefer (10) und Unterkiefer (9) an im wesentlichen benachbarten Haltern (8) am Oberkiefer (10) und Unterkiefer (9) befestigt sind und die Federstäbe (1) bogenartig außerhalb der Zahnreihen derart angeordnet sind, daß der Versatz der Kugelgelenkschalen (2) jeweils in Richtung der Zahnköpfe zeigt.
